# EUROPEAN PATENT SPECIFICATION

(11) **EP 2 990 761 B1**
(45) Date of publication and mention of the grant of the patent: **14.03.2018**
(21) Application number: 14200694.9
(22) Date of filing: 31.12.2014
(51) Int. Cl.: G01C 9/18

(54) **Pointer-type angle measuring device with wireless power supply for lighting**
Winkelmessungsvorrichtung vom Zeigertyp mit drahtloser Energiezufuhr zur Beleuchtung
Dispositif de mesure d'angle de type pointeur à alimentation sans fil pour l'éclairage

(30) Priority: 29.08.2014 CN 201410432033
(43) Date of publication of application: 02.03.2016
(73) Proprietor: Zhejiang Rongsheng Tool Co., Ltd, Jinhua Zhejiang (CN)
(72) Inventor: Zhuang, Chengrong, Jinhua (CN)
(74) Representative: Sun, Yiming

(56) References cited:
- EP-A1- 2 455 723
- WO-A1-88/08115
- US-A- 1 590 136

## Description

### Technical Field

The invention belongs to the field of measuring tools, particularly relates to a pointer-type angle measuring device with wireless power supply for lighting for measuring and correcting horizontal, vertical, 45 degree and other angle state of an object.

### Background

WO 88/08115 A1 describes a spirit level having an outer rotatable member rotatably mounted in a transverse circular aperture in an elongate extrusion, and an inner rotatable member rotatably mounted in a transverse circular aperture in the outer rotatable member and coaxial therewith. A bubble tube is secured to the inner rotatable member in fixed orientation relative thereto, such that rotation of the inner rotatable member effects coarse rotation of the bubble tube and rotation of the outer rotatable member (together with the inner rotatable member) effects fine rotation of the bubble tube.

EP 2 455 723 A1 describes an indicating instrument which is capable of supplying stable power to an light source. The indicating instrument includes a display member having a display portion, a drive unit arranged on the back side of the display member, an indicating member mounted on a revolving shaft of the drive unit and includes a base portion located on the periphery of the revolving shaft and an indicating portion indicating the display portion, and a light source disposed on the indicating member so as to cause the indicating portion to emit light. The indicating instrument includes a coil provided on the side of the drive unit, and a flexible substrate having a coil-type wiring portion provided on the side of the base portion so as to allow electromagnetic induction with the coil and a conducting wiring portion configured to connect the coil-type wiring portion and the light source in electrical conduction, wherein power is supplied to the light source via the conducting wiring portion by an action of electromagnetic induction between the coil and the coil-type wiring portion.

US 1,590,136 A describes a level comprising a body, a casing removably mounted in the body, a dial carried by said casing, a pivotal pin extending from one part of the casing, a weighted pointer loosely mounted on said pin, said pointer being formed of sheet metal and having a centrally positioned cone with the open end positioned so that said pin will project into the cone for supporting the pointer, and a covering transparent panel carried by the casing positioned near the apex of the cone when the parts are in operative position whereby the pointer is permitted a free swinging movement, but is prevented from moving off of said pin.

It is needed to measure and correct horizontal, vertical and other angle state of an object during operation processes such as house decoration, maintenance, item installation, etc. The pointer in the existing pointer-type angle measuring device has no lighting function, and lead to inconvenient in measuring and correction of horizontal, vertical and other angle states of objects in a low light environment.

### Summary

Against the disadvantages in that because the pointer has no lighting function, the existing pointer-type angle measuring device is inconvenient to measure angle in a low light environment, the invention provide a pointer-type angle measuring device with wireless power supply for lighting, and brings convenience for people to measure and correct horizontal, vertical and other angle states of objects in a low light environment.

The technical schemes adopted in the invention are achieved as follows: a pointer-type angle measuring device includes a housing, a dial, and a pointer. The housing consists of a front cover and a rear cover. A window is set in the front cover. A transparent cover is set on the window of the front cover. The pointer is set in an inner cavity of the housing behind the transparent cover. The pointer consists of a pointer body and a pointer head. A first end of a main shaft is fixed on the rear cover. The pointer can rotate around the main shaft as the axis. The pointer head can always point in the vertical direction by gravity action of itself.

The pointer body is a housing structure with an inner cavity, wherein the pointer head of the pointer is made of a transparent material. A shaft hole is set in the middle of a power receiver coil fixing base for communication with the pointer body. A bearing is mounted in the shaft hole in the middle of the pointer body and the power receiver coil fixing base. The main shaft is mounted in a bearing hole of the bearing. A second end of the main shaft is fixed on the transparent cover.

The pointer-type angle measuring device further includes an electronic circuit including a wireless power supply circuit and a wireless power receiving and lighting circuit. The wireless power receiving and lighting circuit is set on the pointer. The wireless power supply circuit includes a power transmitter coil and a circuit board of the wireless power supply circuit, a power transmitter coil fixing base is set on the inner side of the rear cover, the power transmitter coil is fixed on power transmitter coil fixing base, and the power transmitter coil is connected with the circuit board of the wireless power supply circuit through a wire.

In the pointer-type angle measuring device with wireless power supply for lighting, the wireless power receiving and lighting circuit includes a power receiver coil, a first light emitting diode configured to light the pointer head and a circuit board of the wireless power receiving and lighting circuit, a power receiver coil fixing base is set on the back of the pointer body, and the power receiver coil is fixed on the power receiver coil fixing base. Further preferred embodiments of the invention are described as follows. In the pointer-type angle measuring device with wireless power supply for lighting, a level bubble is set in the inner cavity of the pointer body, a level bubble window is set in the front surface of the pointer body of the pointer, and the level bubble window is located, along the pointing axis of the pointer head, above the circuit board of the wireless power receiving and lighting circuit.

In the pointer-type angle measuring device with wireless power supply for lighting, the dial is circular, the dial is set on the outer edge of the window in the front cover in the inner cavity of the housing inside of the transparent cover, a circular light emitting diode fixing ring is set on the back of the dial, and a second light emitting diode is set on the light emitting diode fixing ring.

In the pointer-type angle measuring device with wireless power supply for lighting, the wireless power supply circuit includes a microcomputer processor IC₁, a wireless transmitting circuit, an LED driving circuit, an energy-saving circuit and a power circuit.

In the pointer-type angle measuring device with wireless power supply for lighting, the microcomputer processor IC₁ is HT48R063B microcomputer processor.

In the pointer-type angle measuring device with wireless power supply for lighting, the wireless transmitting circuit includes a triode Q, a transmitter coil L₁, a capacitor 5 C₅, a resistor 2 R₂ and a resistor 3 R₃, wherein one end of the resistor 2 R₂ is connected with the pin 2 of the microcomputer processor IC₁, the other end of the resistor 2 R₂ is connected with a base electrode of the triode Q, the collector electrode of the triode Q is serially connected with the transmitter coil L₁ and the capacitor 5 C₅ in turn, the other end of the capacitor 5 C₅ is grounded, a node between the transmitter coil L₁ and the capacitor 5 C₅ is connected to the power supply voltage VCC of the circuit, an emitter electrode of the triode Q is connected with one end of the resistor 3 R₃, and the other end of the resistor 3 R₃ is grounded.

In the pointer-type angle measuring device with wireless power supply for lighting, the LED driving circuit includes a resistor 7 R₇, a resistor 8 R₈, a resistor 9 R₉, a resistor 10 R₁₀ and a second light emitting diode, wherein, the second light emitting diode consists of a light emitting diode 1 LED₁, a light emitting diode 2 LED₂, a light emitting diode 3 LED₃ and a light emitting diode 4 LED₄, all anodes of the light emitting diode 1 LED₁, the light emitting diode 2 LED₂, the light emitting diode 3 LED₃ and the light emitting diode 4 LED₄ are connected to the power supply voltage VDD of the circuit, cathodes of the light emitting diode 1 LED₁, the light emitting diode 2 LED₂, the light emitting diode 3 LED₃ and the light emitting diode 4 LED₄ are respectively connected with one end of the resistor 7 R₇, the resistor 8 R₈, the resistor 9 R₉ and the resistor 10 R₁₀, and the other end of the resistor 7 R₇, the resistor 8 R₈, the resistor 9 R₉ and the resistor 10 R₁₀ are respectively connected with pin 4, pin 3, pin 1 and pin 16 of the microcomputer processor IC₁.

In the pointer-type angle measuring device with wireless power supply for lighting, the energy-saving circuit includes a capacitor 1 C₁, a capacitor 4 C₄, a resistor 1 R₁, a resistor 11 R₁₁ and a start switch SK, wherein, the capacitor 1 C₁ is an electrolytic capacitor, the anode of the capacitor 1 C₁ is connected with one end of the resistor 11 R₁₁ and the power supply voltage VCC of the circuit, the cathode of the capacitor 1 C₁ is grounded and connected with one end of the resistor 11 R₁₁, one end of the capacitor 4 C₄ and one end of the resistor 1 R₁, the other end of the capacitor 4 C₄ is connected with one end of the start switch SK and the pin 7 of the microcomputer processor IC₁, the other end of the start switch SK is connected with the other end of the resistor 1 R₁;

The power circuit includes a parallel voltage-stabilizing integrated circuit IC₂, a capacitor 2 C₂, a capacitor 3 C₃, a resistor 4 R₄, a resistor 5 R₅, a resistor 6 R₆ and a resistor 12 R₁₂, wherein, the capacitor 2 C₂ is an electrolytic capacitor, the cathode of the capacitor 2 C₂ is grounded and connected with the pin 5 of the microcomputer processor IC₁, one end of the capacitor 3 C₃, the anode of the parallel voltage-stabilizing integrated circuit IC₂, one end of the resistor 5 R₅ and one end of the resistor 6 R₆, the power supply voltage VDD in the circuit is connected to the anode of the capacitor 2 C₂, the pin 13 of the microcomputer processor IC₁, the pin 12 of the microcomputer processor IC₁, the other end of the capacitor 3 C₃, the cathode of the parallel voltage-stabilizing integrated circuit IC₂, one end of the resistor 4 R₄, one end of the resistor 6 R₆ and one end of the resistor 12 R₁₂, the other end of the resistor 4 R₄ is connected with the other end of the resistor 5 R₅ and a reference electrode of the parallel voltage-stabilizing integrated circuit IC₂, and the other end of the resistor 12 R₁₂ is connected to the power supply VCC in the circuit.

In the pointer-type angle measuring device with wireless power supply for lighting, wireless power receiving and lighting circuit includes a power receiver coil L₂, a capacitor 6 C₆ and a first light emitting diode, wherein, the first light emitting diode consists of a light emitting diode 5 LED₅ and a light emitting diode 6 LED₆, the cathode of the light emitting diode 5 LED₅ is connected with the anode of the light emitting diode 6 LED₆, the anode of the light emitting diode 5 LED₅ is connected with one end of the power receiver coil L₂ and one end of the capacitor 6 C₆, the cathode of the light emitting diode 6 LED₆ is connected with the other end of the power receiver coil L₂ and the other end of the capacitor 6 C₆.

Operating principles of the pointer-type angle measuring device with wireless power supply for lighting according to a preferred embodiment of the invention are as follows: the second light emitting diode consisting of the light emitting diode 1 LED₁, the light emitting diode 2 LED₂, the light emitting diode 3 LED₃ and the light emitting diode 4 LED₄ is connected to the LED driving circuit in the wireless power supply circuit through a lead, for lighting the dial. The wireless transmitting circuit in the wireless power supply circuit, microcomputer processor IC₁, etc. generate transmission signals and transmits the signals to the power receiver coil L₂ through the power transmitter coil L₁, to allow the power transmitter coil L₁ to transmit power outwards, the power receiver coil L₂ is responsible for non-contact receiving the power transmitted by the power transmitter coil L₁ and lighting the first light emitting diode on the circuit board in the wireless power receiving and lighting circuit, and the first light emitting diode irradiates the pointer head of the pointer, thus achieving lighting without power lead connection. No matter what angle the datum level of the pointer-type angle measuring device with wireless power supply for lighting is tilted to, the pointer can always point to the position right above by gravity action of itself. Because the dial is fixed on the transparent cover and rotates with the rotation of the pointer-type angle measuring device with wireless lighting, when the rotation angle of the pointer-type angle measuring device with wireless lighting is determined, the angle in the dial that the pointed points to is the angle that the pointer-type angle measuring device with wireless lighting is tilted to.

Compared to the existing angle measuring device, the pointer-type angle measuring device with wireless power supply for lighting of the invention has characteristics in that the pointer can illuminate, and the pointer-type angle measuring device with wireless power supply for lighting of the invention can be used alone or in combination with a traditional measuring device such as spirit level. It is convenient for people to use the pointer-type angle measuring device with wireless power supply for lighting of the invention to measure and correct horizontal, vertical and other angle state of an object in a low light environment.

### Brief Description of the Drawings

Fig. 1 is an appearance representation of the pointer-type angle measuring device with wireless power supply for lighting according to a preferred embodiment of the invention.
Fig. 2 is a structural representation of the pointer-type angle measuring device with wireless power supply for lighting according to a preferred embodiment of the invention.
Fig. 3 is an appearance representation of the pointer.
Fig. 4 is a structural representation of the pointer.
Fig. 5 is a circuit diagram of the electronic circuit of the pointer-type angle measuring device with wireless power supply for lighting according to a preferred embodiment of the invention.

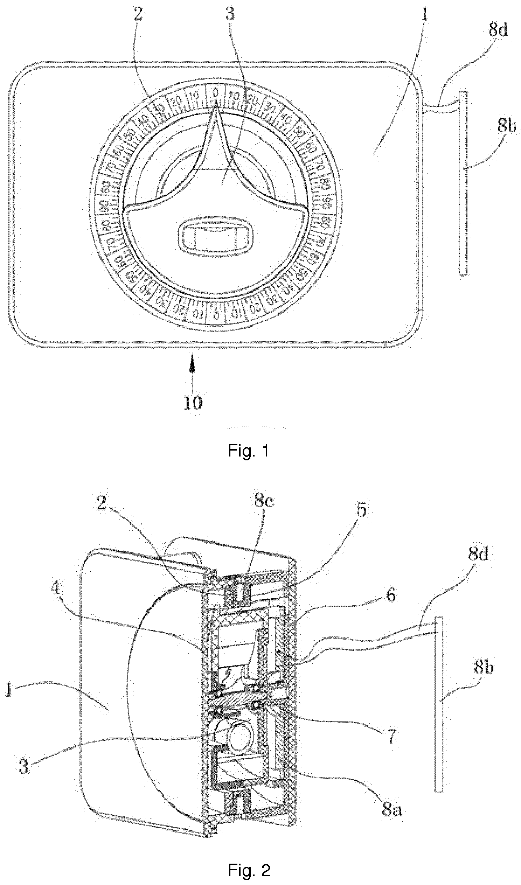

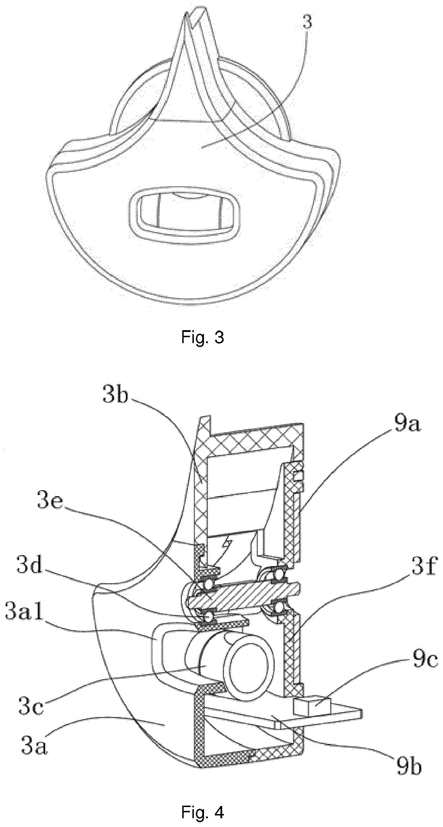

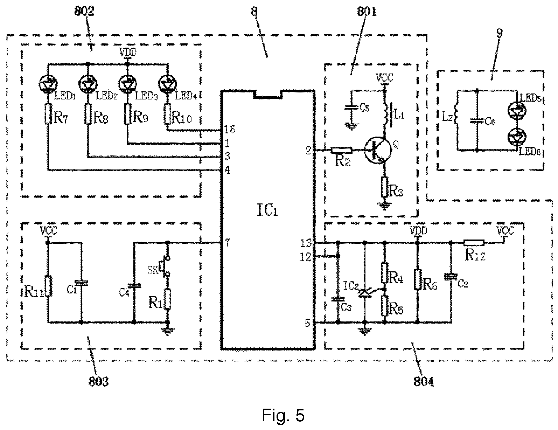

In Fig. 1-Fig. 5, wherein:
1: front cover; 2: dial; 3: pointer body; 3a1: level bubble window; 3b: pointer head; 3c: level bubble; 3d: bearing; 3e: main shaft; 3f: power receiver coil fixing base; 4: transparent cover; 5: light emitting diode fixing ring; 6: rear cover; 7: power transmitter coil fixing base; 8: wireless power supply circuit; 801: wireless transmitting circuit; 802: LED driving circuit; 803: energy-saving circuit; 804: power circuit; 8a: power transmitter coil; 8b: circuit board of the wireless power supply circuit; 8c: second light emitting diode; 8d: lead; 9: wireless power receiving and lighting circuit; 9a: power receiver coil; 9b: circuit board of the wireless power receiving and lighting circuit; 9c: first light emitting diode for lighting of the pointer head 3b; 9b: circuit board of the wireless power receiving and lighting circuit; and 10: datum level; IC₁: microcomputer processor; IC₂: parallel voltage-stabilizing integrated circuit; Q: triode; LED₁: light emitting diode 1; LED₂: light emitting diode 2; LED₃: light emitting diode 3; LED₄: light emitting diode 4; LED₅: light emitting diode 5; LED₆: light emitting diode 6; C₁: capacitor 1; C₂: capacitor 2; C₃: capacitor 3; C₄: capacitor 4; C₅: capacitor 5; C₆: capacitor 6; L₁: power transmitter coil; L₂: power receiver coil; R₁: resistor 1; R₂: resistor 2; R₃: resistor 3; R₄: resistor 4; R₅: resistor 5; R₆: resistor 6; R₇: resistor 7; R₈: resistor 8; R₉: resistor 9; R₁₀: resistor 10; R₁₁: resistor 11; R₁₂: resistor 12; and SK: start switch.

### Detailed Description

By reference to drawings, preferred embodiments of the invention will be further described by examples below.

Referring to Fig. 1-Fig. 5, a pointer-type angle measuring device with wireless power supply for lighting, includes a housing, a dial 2, a pointer 3 and an electronic circuit. Wherein, the electronic circuit includes a wireless power supply circuit 8 and a wireless power receiving and lighting circuit 9, and the housing consists of a front cover 1 and a rear cover 6. A window is set in the front cover 1, a transparent cover 4 is set on the window of the front cover 1, and the pointer 3 is set in an inner cavity of the housing inside of the transparent cover 4, the pointer 3 consists of a pointer body 3a and a pointer head 3b, and the pointer body 3a is a housing structure with an inner cavity. A level bubble 3c is set in the inner cavity of the pointer body 3a, and a level bubble window 3a1 is set in the front surface of the pointer body 3a of the pointer 3. The pointer head 3b of the pointer 3 is made of a transparent material. The wireless power supply circuit 8 includes a power transmitter coil 8a and a circuit board 8b of the wireless power supply circuit, wherein, a power transmitter coil fixing base 7 is set on the inner side of the rear cover 6, the power transmitter coil 8a is fixed on power transmitter coil fixing base 7, and the power transmitter coil 8a is connected with the circuit board 8b of the wireless power supply circuit through a wire 8d. The wireless power receiving and lighting circuit 9 includes a power receiver coil 9a, a first light emitting diode 9c for lighting of the pointer head 3b and a circuit board 9b of the wireless power receiving and lighting circuit, wherein, a power receiver coil fixing base 3f is set on the back of the pointer body 3a, and the power receiver coil 9a is fixed on the power receiver coil fixing base 3f. A shaft hole is set in the middle of the power receiver coil fixing base 3f for communicating with the pointer body 3a, a bearing 3d is mounted in the shaft hole in the middle of the pointer body 3a and the power receiver coil fixing base 3f, a main shaft 3e is mounted in a bearing hole of the bearing 3d, one end of the main shaft 3e is fixed on the transparent cover 4, the other end of the main shaft 3e is fixed on the rear cover 6, and the pointer 3 can rotate around the main shaft 3e as the axis. The circuit board 9b of the wireless power receiving and lighting circuit is set below the pointer head 3b in the inner cavity of the pointer body 3a and the level bubble window 3a1. The dial 2 is circular, the dial 2 is set on the outer edge of the window in the front cover 1 in the inner cavity of the housing inside of the transparent cover 4, a circular light emitting diode fixing ring 5 is set on the back of the dial 2, and a second light emitting diode 8c is set on the light emitting diode fixing ring 5. The datum level 10 of the pointer-type angle measuring device with wireless power supply for lighting is set on the bottom.

In the pointer-type angle measuring device with wireless power supply for lighting, the wireless power supply circuit 8 consists of a microcomputer processor IC₁, a wireless transmitting circuit 801, an LED driving circuit802, an energy-saving circuit 803 and a power circuit 804, wherein:
The microcomputer processor IC₁ is HT48R063B microcomputer processor. Control software of the pointer-type angle measuring device with wireless power supply for lighting according to a preferred embodiment of the invention is set in the microcomputer processor IC₁ in advance to control the electronic circuit in this preferred embodiment of the invention.

The wireless transmitting circuit 801 includes a triode Q, a transmitter coil L₁, a capacitor 5 C₅, a resistor 2 R₂ and a resistor 3 R₃, wherein one end of the resistor 2 R₂ is connected with the pin 2 of the microcomputer processor IC₁, the other end of the resistor 2 R₂ is connected with a base electrode of the triode Q. A collector electrode of the triode Q is serially connected with the transmitter coil L₁ and the capacitor 5 C₅ in turn, the other end of the capacitor 5 C₅ is grounded. A node between the transmitter coil L₁ and the capacitor 5 C₅ is connected to the power supply voltage VCC of the circuit, an emitter electrode of the triode Q is connected with one end of the resistor 3 R₃, and the other end of the resistor 3 R₃ is grounded. The LED driving circuit 802 includes a resistor 7 R₇, a resistor 8 R₈, a resistor 9 R₉, a resistor 10 R₁₀ and a second light emitting diode 8c, wherein, the second light emitting diode 8c consists of a light emitting diode 1 LED₁, a light emitting diode 2 LED₂, a light emitting diode 3 LED₃ and a light emitting diode 4 LED₄. All anodes of the light emitting diode 1 LED₁, the light emitting diode 2 LED₂, the light emitting diode 3 LED₃ and the light emitting diode 4 LED₄ are connected to the power supply voltage VDD of the circuit. Cathodes of the light emitting diode 1 LED₁, the light emitting diode 2 LED₂, the light emitting diode 3 LED₃ and the light emitting diode 4 LED₄ are respectively connected with one end of the resistor 7 R₇, the resistor 8 R₈, the resistor 9 R₉ and the resistor 10 R₁₀, and the other end of the resistor 7 R₇, the resistor 8 R₈, the resistor 9 R₉ and the resistor 10 R₁₀ are respectively connected with pin 4, pin 3, pin 1 and pin 16 of the microcomputer processor IC₁.

The energy-saving circuit 803 includes a capacitor 1 C₁, a capacitor 4 C₄, a resistor 1 R₁, a resistor 11 R₁₁ and a start switch SK, wherein, the capacitor 1 C₁ is an electrolytic capacitor, the anode of the capacitor 1 C₁ is connected with one end of the resistor 11 R₁₁ and the power supply voltage VCC of the circuit, the cathode of the capacitor 1 C₁ is grounded and connected with the other end of the resistor 11 R₁₁. One end of the capacitor 4 C₄ and one end of the resistor 1 R₁, the other end of the capacitor 4 C₄ is connected with one end of the start switch SK and the pin 7 of the microcomputer processor IC₁, the other end of the start switch SK is connected with the other end of the resistor 1 R₁. The energy-saving circuit 803 can cooperate with the microcomputer processor IC₁ to achieve energy-saving function; if users forget to turn off the power supply after using the pointer-type angle measuring device with wireless power supply for lighting according to a preferred embodiment of the invention, the microcomputer processor IC₁ can turn off the power supply for the LED driving circuit 802 and the wireless transmitting circuit 801, thus achieving the goal of energy saving.

The power circuit 804 includes a parallel voltage-stabilizing integrated circuit IC₂, a capacitor 2 C₂, a capacitor 3 C₃, a resistor 4 R₄, a resistor 5 R₅, a resistor 6 R₆ and a resistor 12 R₁₂, wherein, the capacitor 2 C₂ is an electrolytic capacitor, the cathode of the capacitor 2 C₂ is grounded and connected with the pin 5 of the microcomputer processor IC₁, one end of the capacitor 3 C₃, the anode of the parallel voltage-stabilizing integrated circuit IC₂, one end of the resistor 5 R₅ and one end of the resistor 6 R₆, the anode of the capacitor 2 C₂, the pin 13 of the microcomputer processor IC₁, the pin 12 of the microcomputer processor IC₁, the other end of the capacitor 3 C₃, the cathode of the parallel voltage-stabilizing integrated circuit IC₂, one end of the resistor 4 R₄, one end of the resistor 6 R₆ and one end of the resistor 12 R₁₂ are connected to the power supply voltage VDD in the circuit, the other end of the resistor 4 R₄ is connected with the other end of the resistor 5 R₅ and a reference electrode of the parallel voltage-stabilizing integrated circuit IC₂, and the other end of the resistor 12 R₁₂ is connected to the power supply VCC of the circuit.

In the pointer-type angle measuring device with wireless power supply for lighting, the wireless power receiving and lighting circuit 9 includes a power receiver coil L₂, a capacitor 6 C₆ and a first light emitting diode 9c, wherein, the first light emitting diode consists of a light emitting diode 5 LED₅ and a light emitting diode 6 LED₆, the cathode of the light emitting diode 5 LED₅ is connected with the anode of the light emitting diode 6 LED₆, the anode of the light emitting diode 5 LED₅ is connected with one end of the power receiver coil L₂ and one end of the capacitor 6 C₆, the cathode of the light emitting diode 6 LED₆ is connected with the other end of the power receiver coil L₂ and the other end of the capacitor 6 C₆.

## Claims

1. A pointer-type angle measuring device including a housing, a dial (2), a pointer (3), the housing consisting of a front cover (1) and a rear cover (6), wherein a window is set in the front cover (1), wherein a transparent cover (4) is set on the window of the front cover (1), and the pointer (3) is set in an inner cavity of the housing behind the transparent cover (4), wherein the pointer (3) consists of a pointer body (3a) and a pointer head (3b), wherein a first end of a main shaft (3e) is fixed on the rear cover (6), and the pointer (3) can rotate around the axis of the main shaft (3e), and the pointer head (3b) can always point in the vertical direction by gravity action of itself, **characterized in that**
- the pointer body (3a) is a housing structure with an inner cavity, wherein the pointer head (3b) of the pointer (3) is made of a transparent material, wherein a shaft hole is set in the middle of a power receiver coil fixing base (3f) for communicating with the pointer body (3a), wherein a bearing (3d) is mounted in the shaft hole in the middle of the pointer body (3a) and the power receiver coil fixing base (3f), wherein the main shaft (3e) is mounted in a bearing hole of the bearing (3d), wherein a second end of the main shaft (3e) is fixed on the transparent cover (4); and **in that**
- the pointer-type angle measuring device further includes an electronic circuit including a wireless power supply circuit (8) and a wireless power receiving and a lighting circuit (9), wherein the wireless power receiving and lighting circuit (9) is set on the pointer (3), wherein the wireless power supply circuit (8) includes a power transmitter coil (8a) and a circuit board (8b) of the wireless power supply circuit, wherein a power transmitter coil fixing base (7) is set on the inner side of the rear cover (6), wherein the power transmitter coil (8a) is fixed on a power transmitter coil fixing base (7), and wherein the power transmitter coil (8a) is connected with the circuit board (8b) of the wireless power supply circuit through a wire (8d).
wherein the wireless power receiving and lighting circuit (9) includes a power receiver coil (9a), a first light emitting diode (9c) configured to light the pointer head (3b) and a circuit board (9b) of the wireless power receiving and lighting circuit, wherein a power receiver coil fixing base (3f) is set on the back of the pointer body (3a), and the power receiver coil (9a) is fixed on the power receiver coil fixing base (3f).

2. The pointer-type angle measuring device according to claim 1, wherein a level bubble (3c) is set in the inner cavity of the pointer body (3a), a level bubble window (3a1) is set in a front surface of the pointer body (3a) of the pointer (3), and the level bubble window (3a1) is located, along the pointing axis of the pointer head, above the circuit board (9b) of the wireless power receiving and lighting circuit.

3. The pointer-type angle measuring device according to claim 2, wherein the dial (2) is circular, the dial (2) is set on the outer edge of the window in the front cover (1) in the inner cavity of the housing inside of the transparent cover (4), a circular light emitting diode fixing ring (5) is set on the back of the dial (2), and a second light emitting diode (8c) is set on the light emitting diode fixing ring (5).

4. The pointer-type angle measuring device according to claim 3, wherein the wireless power supply circuit (8) includes a microcomputer processor (IC₁), a wireless transmitting circuit (801), an LED driving circuit (802), an energy-saving circuit (903), and a power circuit (804).

5. The pointer-type angle measuring device according to claim 4, wherein the microcomputer processor (IC₁) is a HT48R063B microcomputer processor.

6. The pointer-type angle measuring device according to claim 5, wherein the wireless transmitting circuit (801) includes a triode (Q), a transmitter coil (L₁), a capacitor 5 (C₅), a resistor 2 (R₂) and a resistor 3 (R₃), wherein one end of the resistor 2 (R₂) is connected with a pin 2 of the microcomputer processor (IC₁), the other end of the resistor 2 (R₂) is connected with a base electrode of the triode (Q), a collector electrode of the triode (Q) is serially connected with the transmitter coil (L₁) and the capacitor 5 (C₅) in turn, the other end of the capacitor 5 (C₅) is grounded, a node between the transmitter coil (L₁) and the capacitor 5 (C₅) is connected to the power supply voltage VCC of the circuit, an emitter electrode of the triode (Q) is connected with one end of the resistor 3 (R₃), and the other end of the resistor 3 (R₃) is grounded.

7. The pointer-type angle measuring device according to claim 5, wherein the LED driving circuit (802) includes a resistor 7 (R₇), a resistor 8 (R₈), a resistor 9 (R₉), a resistor 10 (R₁₀), and the second light emitting diode, wherein the second light emitting diode consists of a light emitting diode 1 (LED₁), a light emitting diode 2 (LED₂), a light emitting diode 3 (LED₃), and a light emitting diode 4 (LED₄), all anodes of the light emitting diode 1 (LED₁), the light emitting diode 2 (LED₂), the light emitting diode 3 (LED₃), and the light emitting diode 4 (LED₄) are connected to the power supply voltage VDD of the circuit, cathodes of the light emitting diode 1 (LED₁), the light emitting diode 2 (LED₂), the light emitting diode 3 (LED₃), and the light emitting diode 4 (LED₄) are respectively connected with one end of the resistor 7 (R₇), the resistor 8 (R₈), the resistor 9 (R₉), and the resistor 10 (R₁₀), and the other end of the resistor 7 (R₇), the resistor 8 (R₈), the resistor 9 (R₉), and the resistor 10 (R₁₀) are respectively connected with pin 4, pin 3, pin 1, and pin 16 of the microcomputer processor (IC₁).

8. The pointer-type angle measuring device according to claim 5, wherein the energy-saving circuit (803) includes a capacitor 1 (C₁), a capacitor 4 (C₄), a resistor 1 (R₁), a resistor 11 (R₁₁), and a start switch (SK), wherein the capacitor 1 (C₁) is an electrolytic capacitor, the anode of the capacitor 1 (C₁) is connected with one end of the resistor 11 (R₁₁) and the power supply voltage VCC of the circuit, the cathode of the capacitor 1 (C₁) is grounded and connected with the other end of the resistor 11 (R₁₁), one end of the capacitor 4 (C₄), and one end of the resistor 1 (R₁), the other end of the capacitor 4 (C₄) is connected with one end of the start switch (SK) and the pin 7 of the microcomputer processor (IC₁), the other end of the start switch (SK) is connected with the other end of the resistor 1 (R₁).

9. The pointer-type angle measuring device according to claim 5, wherein the power circuit (804) includes a parallel voltage-stabilizing integrated circuit (IC₂), a capacitor 2 (C₂), a capacitor 3 (C₃), a resistor 4 (R₄), a resistor 5 (R₅), a resistor 6 (R₆), and a resistor 12 (R₁₂), wherein the capacitor 2 (C₂) is an electrolytic capacitor, the cathode of the capacitor 2 (C₂) is grounded and connected with the pin 5 of the microcomputer processor (IC₁), one end of the capacitor 3 (C₃), the anode of the parallel voltage-stabilizing integrated circuit (IC₂), one end of the resistor 5 (R₅), and one end of the resistor 6 (R₆), the anode of the capacitor 2 (C₂), the pin 13 of the microcomputer processor (IC₁), the pin 12 of the microcomputer processor (IC₁), the other end of the capacitor 3 (C₃), the cathode of the parallel voltage-stabilizing integrated circuit (IC₂), one end of the resistor 4 (R₄, one end of the resistor 6 (R₆), and one end of the resistor 12 (R₁₂) are connected to the power supply voltage VDD of the circuit, the other end of the resistor 4 (R₄) is connected with the other end of the resistor 5 (R₅) and a reference electrode of the parallel voltage-stabilizing integrated circuit (IC₂), and the other end of the resistor 12 (R₁₂) is connected to the power supply VCC of the circuit.

10. The pointer-type angle measuring device according to claim 5, wherein the wireless power receiving and lighting circuit (9) includes a power receiver coil (L₂), a capacitor 6 (C₆) and the first light emitting diode, wherein the first light emitting diode consists of a light emitting diode 5 (LED₅) and a light emitting diode 6 (LED₆), the cathode of the light emitting diode 5 (LED₅) is connected with the anode of the light emitting diode 6 (LED₆), the anode of the light emitting diode 5 (LED₅) is connected with one end of the power receiver coil (L₂) and one end of the capacitor 6 (C₆), the cathode of the light emitting diode 6 (LED₆ is connected with the other end of the power receiver coil (L₂) and the other end of the capacitor 6 (C₆).

## Patentansprüche

1. Winkelmessvorrichtung vom Zeigertyp, die ein Gehäuse, eine Nummernscheibe (2), einen Zeiger (3) aufweist, wobei das Gehäuse aus einer vorderen Abdeckung (1) und einer hinteren Abdeckung (6) besteht, wobei sich ein Fenster in der vorderen Abdeckung (1) befindet, wobei sich eine transparente Abdeckung (4) auf dem Fenster der vorderen Abdeckung (1) befindet und sich der Zeiger (3) in einem inneren Hohlraum des Gehäuses hinter der transparenten Abdeckung (4) befindet, wobei der Zeiger (3) aus einem Zeigerkörper (3a) und einem Zeigerkopf (3b) besteht, wobei ein erstes Ende einer Hauptwelle (3e) auf der hinteren Abdeckung (6) befestigt ist und sich der Zeiger (3) um die Achse der Hauptwelle (3e) drehen kann und der Zeigerkopf (3b) immer in die vertikale Richtung durch eigene Schwerkraftwirkung zeigen kann, **dadurch gekennzeichnet, dass**
- der Zeigerkörper (3a) eine Gehäusestruktur mit einem inneren Hohlraum ist, wobei der Zeigerkopf (3b) des Zeigers (3) aus einem transparenten Material hergestellt ist, wobei sich ein Wellenloch in der Mitte einer Stromempfängerspule-Befestigungsbasis (3f) zum Kommunizieren mit dem Zeigerkörper (3a) befindet, wobei ein Lager (3d) in dem Wellenloch in der Mitte des Zeigerkörpers (3a) und der Stromempfängerspule-Befestigungsbasis (3f) montiert ist, wobei die Hauptwelle (3e) in einem Lagerloch des Lagers (3d) montiert ist, wobei ein zweites Ende der Hauptwelle (3e) auf der transparenten Abdeckung (4) befestigt ist, und dass
- die Winkelmessvorrichtung vom Zeigertyp ferner eine elektronische Schaltung aufweist, die eine drahtlose Stromversorgungsschaltung (8) und eine drahtlose Stromempfangs- und Beleuchtungsschaltung (9) aufweist, wobei sich die Stromempfangs- und Beleuchtungsschaltung (9) auf dem Zeiger (3) befindet, wobei die drahtlose Stromversorgungsschaltung (8) eine Stromübertragerspule (8a) und eine Schaltplatte (8b) der drahtlosen Stromversorgungsschaltung aufweist, wobei sich eine Stromübertragerspule-Befestigungsbasis (7) auf der inneren Seite der hinteren Abdeckung (6) befindet, wobei die Stromübertragerspule (8a) auf einer Stromübertrager-Befestigungsbasis (7) befestigt ist und wobei die Stromübertragerspule (8a) mit der Schaltplatte (8b) der drahtlosen Stromversorgungsschaltung durch einen Draht (8d) verbunden ist,
wobei die drahtlose Stromempfangs- und Beleuchtungsschaltung (9) eine Stromempfängerspule (9a), eine erste Leuchtdiode (9c), die konfiguriert ist, um den Zeigerkopf (3b) zu beleuchten, und eine Schaltplatte (9b) der drahtlosen Stromempfangs- und Beleuchtungsschaltung aufweist, wobei sich eine Stromempfängerspule-Befestigungsbasis (3f) auf der Rückseite des Zeigerkörpers (3a) befindet und die Stromempfängerspule (9a) auf der Stromempfängerspule-Befestigungsbasis (3f) befestigt ist.

2. Winkelmessvorrichtung vom Zeigertyp nach Anspruch 1, wobei sich eine Wasserwaage (3c) in dem inneren Hohlraum des Zeigerkörpers (3a) befindet, wobei sich ein Wasserwaagenfenster (3a1) in einer vorderen Fläche des Zeigerkörpers (3a1) des Zeigers (3) befindet und das Wasserwaagenfenster (3a1) entlang der Zeigerachse des Zeigerkopfs über der Schaltplatte (9b) der drahtlosen Stromempfangs- und Beleuchtungsschaltung angeordnet ist.

3. Winkelmessvorrichtung vom Zeigertyp nach Anspruch 2, wobei die Nummernscheibe (2) kreisförmig ist, wobei sich die Nummernscheibe (2) auf dem äußeren Rand des Fensters in der vorderen Abdeckung (1) in dem inneren Hohlraum des Gehäuses im Inneren der transparenten Abdeckung (4) befindet, wobei sich ein Leuchtdiodenbefestigungsring (5) auf der Rückseite der Nummernscheibe (2) befindet und sich eine zweite Leuchtdiode (8c) auf dem Leuchtdiodenbefestigungsring (5) befindet.

4. Winkelmessvorrichtung vom Zeigertyp nach Anspruch 3, wobei die drahtlose Stromversorgungsschaltung (8) einen Mikrocomputer-Prozessor (IC₁), eine drahtlose Übertragungsschaltung (801), eine LED-Treiberschaltung (802), eine energiesparende Schaltung (903) und eine Stromschaltung (804) aufweist.

5. Winkelmessvorrichtung vom Zeigertyp nach Anspruch 4, wobei der Mikrocomputer-Prozessor (IC₁) ein HT48R063B Mikrocomputer-Prozessor ist.

6. Winkelmessvorrichtung vom Zeigertyp nach Anspruch 5, wobei die drahtlose Übertragungsschaltung (801) eine Triode (Q), eine Übertragerspule (L₁), einen Kondensator 5 (C₅), einen Widerstand 2 (R₂) und einen Widerstand 3 (R₃) aufweist, wobei ein Ende des Widerstands 2 (R₂) mit einem Stift 2 des Mikrocomputer-Prozessors (IC₁) verbunden ist, wobei das andere Ende des Widerstands 2 (R₂) mit einer Basiselektrode der Triode (Q) verbunden ist, wobei eine Kollektorelektrode der Triode (Q) mit der Übertragerspule (L₁) und wiederum dem Kondensator 5 (C₅) in Reihe verbunden ist, wobei das andere Ende des Kondensators 5 (C₅) geerdet ist, wobei ein Knoten zwischen der Übertragerspule (L₁) und dem Kondensator 5 (C₅) mit der Stromversorgungsspannung VCC der Schaltung verbunden ist, wobei eine Emitterelektrode der Triode (Q) mit einem Ende des Widerstands 3 (R₃) verbunden ist und das andere Ende des Widerstands 3 (R₃) geerdet ist.

7. Winkelmessvorrichtung vom Zeigertyp nach Anspruch 5, wobei die LED-Treiberschaltung (802) einen Widerstand 7 (R₇), einen Widerstand 8 (R₈), einen Widerstand 9 (R₉), einen Widerstand 10 (R₁₀) und die zweite Leuchtdiode aufweist, wobei die zweite Leuchtdiode aus einer Leuchtdiode 1 (LED₁), einer Leuchtdiode 2 (LED₂), einer Leuchtdiode 3 (LED₃) und einer Leuchtdiode 4 (LED₄) besteht, wobei alle Anoden der Leuchtdiode 1 (LED₁), der Leuchtdiode 2 (LED₂), der Leuchtdiode 3 (LED₃) und der Leuchtdiode 4 (LED₄) mit der Stromversorgungsspannung VDD der Schaltung verbunden sind, wobei Kathoden der Leuchtdiode 1 (LED₁), der Leuchtdiode 2 (LED₂), der Leuchtdiode 3 (LED₃) und der Leuchtdiode 4 (LED₄) jeweils mit einem Ende des Widerstands 7 (R₇), des Widerstands 8 (R₈), des Widerstands 9 (R₉) und des Widerstands 10 (R₁₀) verbunden sind und das andere Ende des Widerstands 7 (R₇), des Widerstands 8 (R₈), des Widerstands 9 (R₉) und des Widerstands 10 (R₁₀) jeweils mit Stift 4, Stift 3, Stift 1 und Stift 16 des Mikrocomputer-Prozessors (IC₁) verbunden sind.

8. Winkelmessvorrichtung vom Zeigertyp nach Anspruch 5, wobei die energiesparende Schaltung (803) einen Kondensator 1 (C₁), einen Kondensator 4 (C₄), einen Widerstand 1 (R₁), einen Widerstand 11 (R₁₁) und einen Startschalter (SK) aufweist, wobei der Kondensator 1 (C₁) ein elektrolytischer Kondensator ist, wobei die Anode des Kondensators 1 (C₁) mit einem Ende des Widerstands 11 (R₁₁) und der Stromversorgungsspannung VCC der Schaltung verbunden ist, wobei die Kathode des Kondensators 1 (C₁) geerdet und mit dem anderen Ende des Widerstands 11 (R₁₁), einem Ende des Kondensators 4 (C₄) und einem Ende des Widerstands 1 (R₁) verbunden ist, wobei das andere Ende des Kondensators 4 (C₄) mit einem Ende des Startschalters (SK) und dem Stift 7 des Mikrocomputer-Prozessors (IC₁) verbunden ist, wobei das andere Ende des Startschalters (SK) mit dem anderen Ende des Widerstands 1 (R₁) verbunden ist.

9. Winkelmessvorrichtung vom Zeigertyp nach Anspruch 5, wobei die Stromschaltung (804) eine parallele spannungsstabilisierende integrierte Schaltung (IC₂), einen Kondensator 2 (C₂), einen Kondensator 3 (C₃), einen Widerstand 4 (R₄), einen Widerstand 5 (R₅), einen Widerstand 6 (R₆) und einen Widerstand 12 (R₁₂) aufweist, wobei der Kondensator 2 (C₂) ein elektrolytischer Kondensator ist, wobei die Kathode des Kondensators 2 (C₂) geerdet und mit dem Stift 5 des Mikrocomputer-Prozessors (IC₁), einem Ende des Kondensators 3 (C₃), der Anode der parallelen spannungsstabilisierenden integrierten Schaltung (IC₂), einem Ende des Widerstands 5 (R₅) und einem Ende des Widerstands 6 (R₆) verbunden ist, wobei die Anode des Kondensators 2 (C₂), der Stift 13 des Mikrocomputer-Prozessors (IC₁), der Stift 12 des Mikrocomputer-Prozessors (IC₁) ,das andere Ende des Kondensators 3 (C₃), die Kathode der parallelen spannungsstabilisierenden integrierten Schaltung (IC₂), ein Ende des Widerstands 4 (R₄, ein Ende des Widerstands 6 (R₆) und ein Ende des Widerstands 12 (R₁₂) mit der Stromversorgungsspannung VDD der Schaltung verbunden sind, wobei das andere Ende des Widerstands 4 (R₄) mit dem anderen Ende des Widerstands 5 (R₅) und einer Referenzelektrode der parallelen spannungsstabilisierenden integrierten Schaltung (IC₂) verbunden ist und das andere Ende des Widerstands 12 (R₁₂) mit der Stromversorgung VCC der Schaltung verbunden ist.

10. Winkelmessvorrichtung vom Zeigertyp nach Anspruch 5, wobei die drahtlose Stromempfangs- und Beleuchtungsschaltung (9) eine Stromempfängerspule (L₂), einen Kondensator 6 (C₆) und die erste Leuchtdiode aufweist, wobei die erste Leuchtdiode aus einer Leuchtdiode 5 (LED₅) und einer Leuchtdiode 6 (LED₆) besteht, wobei die Kathode der Leuchtdiode 5 (LED₅) mit der Anode der Leuchtdiode 6 (LED₆) verbunden ist, wobei die Anode der Leuchtdiode 5 (LED₅) mit einem Ende der Stromempfängerspule (L₂) und einem Ende des Kondensators 6 (C₆) verbunden ist, wobei die Kathode der Leuchtdiode 6 (LED₆ mit dem anderen Ende der Stromempfängerspule (L₂) und dem anderen Ende des Kondensators 6 (C₆) verbunden ist.

## Revendications

1. Dispositif de mesure d'angle de type pointeur comprenant un logement, un cadran (2), un pointeur (3), le logement consistant en un couvercle avant (1) et un couvercle arrière (6), dans lequel une fenêtre est placée dans le couvercle avant (1), dans lequel un couvercle transparent (4) est placé sur la fenêtre du couvercle avant (1), et le pointeur (3) est placé dans une cavité intérieure du logement derrière le couvercle transparent (4), dans lequel le pointeur (3) consiste en un corps de pointeur (3a) et une tête de pointeur (3b), dans lequel une première extrémité d'un arbre principal (3e) est fixée sur le couvercle arrière (6), et le pointeur (3) peut tourner sur l'axe de l'arbre principal (3e), et la tête de pointeur (3b) peut toujours pointer dans la direction verticale par action de sa propre gravité, **caractérisé en ce que**
- le corps de pointeur (3a) est une structure de logement avec une cavité intérieure, dans lequel la tête de pointeur (3b) du pointeur (3) est faite d'un matériau transparent, dans lequel un trou d'arbre est placé dans le milieu d'une base de fixation de bobine de récepteur de courant électrique (3f) pour communiquer avec le corps de pointeur (3a), dans lequel un palier (3d) est monté dans le trou d'arbre dans le milieu du corps de pointeur (3a) et de la base de fixation de bobine de récepteur de courant électrique (3f), dans lequel l'arbre principal (3e) est monté dans un trou de palier du palier (3d), dans lequel une seconde extrémité de l'arbre principal (3e) est fixée sur le couvercle transparent (4) ; et **en ce que**
- le dispositif de mesure d'angle de type pointeur comprend en outre un circuit électronique incluant un circuit d'alimentation électrique sans fil (8) et un circuit de réception de courant électrique et d'éclairage sans fil (9), dans lequel le circuit de réception de courant électrique et d'éclairage sans fil (9) est placé sur le pointeur (3), dans lequel le circuit d'alimentation électrique sans fil (8) comprend une bobine de transmetteur de courant électrique (8a) et une carte de circuit (8b) du circuit d'alimentation électrique sans fil, dans lequel une base de fixation de bobine de transmetteur de courant électrique (7) est placée sur le côté intérieur du couvercle arrière (6), dans lequel la bobine de transmetteur de courant électrique (8a) est fixée sur une base de fixation de bobine de transmetteur de courant électrique (7), et dans lequel la bobine de transmetteur de courant électrique (8a) est connectée à la carte de circuit (8b) du circuit d'alimentation électrique sans fil par le biais d'un câble (8d),
dans lequel le circuit de réception de courant électrique et d'éclairage sans fil (9) comprend une bobine réceptrice de courant électrique (9a), une première diode électro-luminescente (9c) configurée pour éclairer la tête de pointer (3b) et une carte de circuit (9b) du circuit de réception de courant électrique et d'éclairage sans fil, dans lequel une base de fixation de bobine réceptrice de courant électrique (3f) est placée au dos du corps de pointeur (3a), et la bobine réceptrice de courant électrique (9a) est fixée sur la base de fixation de bobine réceptrice de courant électrique (3f).

2. Dispositif de mesure d'angle de type pointeur selon la revendication 1, dans lequel un niveau à bulle (3c) est placé sur la cavité intérieure du corps de pointeur (3a), une fenêtre de niveau à bulle (3a1) est placée dans une surface avant du corps de pointeur (3a) du pointeur (3), et la fenêtre de niveau à bulle (3a1) est située, le long de l'axe de pointeur de la tête de pointeur, au-dessus de la carte de circuit (9b) du circuit de réception de courant électrique et d'éclairage sans fil.

3. Dispositif de mesure d'angle de type pointeur selon la revendication 2, dans lequel le cadran (2) est circulaire, le cadran (2) est placé sur le bord extérieur de la fenêtre dans le couvercle avant (1) dans la cavité intérieure du logement à l'intérieur du couvercle transparent (4), une bague de fixation de diode électro-luminescente circulaire (5) est placée au dos du cadran (2), et une seconde diode électro-luminescente (8c) est placée sur la bague de fixation de diode électro-luminescente circulaire (5).

4. Dispositif de mesure d'angle de type pointeur selon la revendication 3, dans lequel le circuit d'alimentation électrique sans fil (8) comprend un processeur (IC₁) de micro-ordinateur, un circuit de transmission sans fil (801), un circuit de pilotage de LED (802), un circuit à économie d'énergie (903) et un circuit d'alimentation électrique (804).

5. Dispositif de mesure d'angle de type pointeur selon la revendication 4, dans lequel le processeur (IC₁) de micro-ordinateur est un processeur de micro-ordinateur HT48R063B.

6. Dispositif de mesure d'angle de type pointeur selon la revendication 5, dans lequel le circuit de transmission sans fil (801) comprend une triode (Q), une bobine de transmetteur (L₁), un condensateur 5 (C₅), une résistance 2 (R₂) et une résistance 3 (R₃), dans lequel une extrémité de la résistance 2 (R₂) est connectée à une broche 2 du processeur (IC₁) de micro-ordinateur, l'autre extrémité de la résistance 2 (R₂) est connectée à une broche 2 du processeur (IC₁) de micro-ordinateur, l'autre extrémité de la résistance 2 (R₂) est connectée à une électrode de base de la triode (Q), une électrode collectrice de la triode (Q) est connectée en série avec la bobine de transmetteur (L1) et le condensateur 5 (C₅) en retour, l'autre extrémité du condensateur 5 (C₅) est à la terre, un noeud entre la bobine de transmetteur (L₁) et le condensateur 5 (C₅) est connecté à la tension d'alimentation électrique VCC du circuit, une électrode d'émetteur de la triode (Q) est connectée à une extrémité de la résistance 3 (R₃), et l'autre extrémité de la résistance 3 (R₃) est à la terre.

7. Dispositif de mesure d'angle de type pointeur selon la revendication 5, dans lequel le circuit de pilotage de LED (802) comprend une résistance 7 (R₇), une résistance 8 (R₈), une résistance 9 (Rg), une résistance 10 (R₁₀) et la seconde diode électro-luminescente, dans lequel la seconde diode électro-luminescente est constituée d'une diode électro-luminescente 1 (LED₁), d'une diode électro-luminescente 2 (LED₂), d'une diode électro-luminescente (LED₃) et d'une diode électro-luminescente 4 (LED₄), toutes les anodes de la diode électro-luminescente 1 (LED₁), de la diode électro-luminescente 2 (LED₂), de la diode électro-luminescente (LED₃) et de la diode électro-luminescente 4 (LED₄) sont connectées à la tension d'alimentation électrique VDD du circuit, les cathodes de la diode électro-luminescente 1 (LED₁), de la diode électro-luminescente 2 (LED₂), de la diode électro-luminescente (LED₃) et de la diode électro-luminescente 4 (LED₄) sont respectivement connectées à une extrémité de la résistance 7 (R₇), de la résistance 8 (R₈), de la résistance 9 (R₉) et de la résistance 10 (R₁₀), et l'autre extrémité de la résistance 7 (R₇), de la résistance 8 (R₈), de la résistance 9 (R₉) et de la résistance 10 (R₁₀) sont respectivement connectées à la broche 4, la broche 3, la broche 1 et la broche 16 du processeur (IC₁) de micro-ordinateur.

8. Dispositif de mesure d'angle de type pointeur selon la revendication 5, dans lequel le circuit à économie d'énergie (803) comprend un condensateur 1 (C₁), un condensateur 4 (C₄), une résistance 1 (R₁), une résistance 11 (R₁₁) et un interrupteur de départ (SK), dans lequel le condensateur 1 (C₁) est un condensateur électrolytique, l'anode du condensateur 1 (C₁) est connectée à une extrémité de la résistance 11 (R₁₁) et à la tension d'alimentation électrique VCC du circuit, la cathode du condensateur 1 (C₁) est à la terre et connectée à l'autre extrémité de la résistance 11 (R₁₁), une extrémité du condensateur 4 (C₄) et une extrémité de la résistance 1 (R₁), l'autre extrémité du condensateur 4 (C₄) est connectée à une extrémité de l'interrupteur de départ (SK) et à la broche 7 du processeur (IC₁) de micro-ordinateur, l'autre extrémité de l'interrupteur de départ (SK) est connectée à l'autre extrémité de la résistance 1 (R₁).

9. Dispositif de mesure d'angle de type pointeur selon la revendication 5, dans lequel le circuit d'alimentation électrique (804) comprend un circuit intégré à stabilisation de tension parallèle (IC₂), un condensateur 2 (C₂), un condensateur 3 (C₃), une résistance 4 (R₄), une résistance 5 (R₅), une résistance 6 (R₆), et une résistance 12 (R₁₂), dans lequel le condensateur 2 (C₂) est un condensateur électrolytique, la cathode du condensateur 2 (C₂) est à la terre et connectée à la broche 5 du processeur (IC₁) de micro-ordinateur, une extrémité du condensateur 3 (C₃), l'anode du circuit intégré à stabilisation de tension parallèle (IC₂), une extrémité de la résistance 5 (R₅) et une extrémité de la résistance 6 (R₆), l'anode du condensateur 2 (C₂), la broche 13 du processeur (IC₁) de micro-ordinateur, la broche 12 du processeur (IC₁) de micro-ordinateur, l'autre extrémité du condensateur 3 (C₃), la cathode du circuit intégré à stabilisation de tension parallèle (IC₂), une extrémité de la résistance 4 (R₄), une extrémité de la résistance 6 (R₆), et une extrémité de la résistance 12 (R₁₂) sont connectées à la tension d'alimentation électrique VDD du circuit, l'autre extrémité de la résistance 4 (R₄) est connectée à l'autre extrémité de la résistance 5 (R₅) et une électrode de référence du circuit intégré à stabilisation de tension parallèle (IC₂), et l'autre extrémité de la résistance 12 (R₁₂) est connectée à la tension d'alimentation VCC du circuit.

10. Dispositif de mesure d'angle de type pointeur selon la revendication 5, dans lequel le circuit de réception de courant électrique et d'éclairage sans fil (9) comprend une bobine réceptrice de courant électrique (L₂), un condensateur 6 (C₆) et la première diode électro-luminescente, dans lequel la première diode électro-luminescente consiste en une diode électro-luminescente 5 (LED₅), et une diode électro-luminescente 6 (LED₆), la cathode de la diode électro-luminescente 5 (LED₅) est connectée à l'anode de la diode électro-luminescente 6 (LED₆), l'anode de la diode électro-luminescente 5 (LED₅) est connectée à une extrémité de la bobine réceptrice de courant électrique (L₂) et une extrémité du condensateur 6 (C₆), la cathode de la diode électro-luminescente 6 (LED₆) est connectée à l'autre extrémité de la bobine réceptrice de courant électrique (L₂) et l'autre extrémité du condensateur 6 (C₆).
